Europäisches Patentamt

European Patent Office

Office européen des brevets

(19)

(11) Publication number: **0 042 948**
**B1**

(12) **EUROPEAN PATENT SPECIFICATION**

(45) Date of publication of patent specification: **18.01.84**

(51) Int. Cl.³: **G 06 K 15/10, B 41 J 3/10**

(21) Application number: **81103618.5**

(22) Date of filing: **12.05.81**

(54) **High speed impact matrix printer.**

(30) Priority: **30.06.80 US 164257**

(43) Date of publication of application:
**06.01.82 Bulletin 82/1**

(45) Publication of the grant of the patent:
**18.01.84 Bulletin 84/3**

(84) Designated Contracting States:
**DE FR GB IT**

(56) References cited:
**GB - A - 1 336 688**
**GB - A - 1 363 657**
**GB - A - 1 469 634**
**GB - A - 1 550 103**
**US - A - 3 942 620**

(73) Proprietor: **International Business Machines Corporation**
**Old Orchard Road**
**Armonk, N.Y. 10504 (US)**

(72) Inventor: **Cannon, Jack Wilson**
**661 Northeast Marine Drive**
**Boca Raton Florida 33432 (US)**

(74) Representative: **Colas, Alain**
**COMPAGNIE IBM FRANCE Département de Propriété Industrielle**
**F-06610 La Gaude (FR)**

High speed impact matrix printer

Technical Field

The present invention pertains to an improved impact matrix printer.

Background Art

Impact matrix printers are well known in the art and are typically used as high speed printers in conjunction with electronic data processing systems or digital communications systems. Impact matrix printers known in the art include serial wire printers, bar matrix printers and helix matrix printers. In such existing impact matrix printers, a character is formed from the visual impression of dots or squares on the print record arranged in accordance with a matrix character pattern.

An illustration of the operation of an existing impact matrix printer may be provided by describing a serial wire matrix printer. A serial wire matrix printer has a printhead comprised of a column of print wires stepped serially across a print record to print a line of characters. Electrical signals derived from a data processing or digital communication system control the selective firing of a print hammer, causing selected wires in the printhead to be driven against an inked ribbon to form an inked impression upon the print record. Character configuration information for a font of characters formed in accordance with a matrix character pattern is placed in storage, and the electrical control signals activate the print hammers firing the print wires in accordance with the character configuration information. Upon completion of a line of print, the print record is advanced to the next line and the printhead is returned to its starting position.

Wire matrix printers now generally utilize a circular impact wire printing element in conjunction with a 7x7 restricted matrix character pattern to form the character images of a font of characters. The total character matrix is ten positional units wide, providing three positional units between adjacent characters. The matrix character pattern restriction is such that any dot defined as "on" must be horizontally adjacent to an "off" dot, so that no two horizontally adjacent dots can exist within the character matrix for the font of characters. While a single dot may exist in any one of the seven discrete positions along a row, this matrix pattern allows for a maximum of only four dots to exist within one horizontal row. This pattern guarantees a minimum defined "off" time to allow for print hammer recovery, which allows the printhead to move at twice the speed it would if each of the seven dots in the 7x7 matrix was printed. A matrix printer of this type is described in US-A-3942620.

It is of course advantageous to operate a printer at the highest print speeds possible without a reduction in print quality. Current high speed matrix printers are limited by the mechanical restraints of the incremental actuation of the print hammers of the matrix printer fired in response to electrical control signals. A need has thus arisen for increasing the speed of an impact matrix printer while maintaining print quality.

Summary of the Invention

The invention as claimed satisfies this need. A high speed impact, matrix printer as claimed operates according to a matrix character pattern which requires fewer strokes to form a character. The horizontal character matrix for the font of characters is divided into a larger number of time increments in which the impact member covers several timing increments to increase the speed of printing. In a preferred form the total character matrix is twenty units wide and has thirteen adjacent units within the matrix as possible positions for firing the print hammer. A storage element is used to store the basic print hammer firing information for forming each of the characters. The restricted matrix pattern prevents the hammer from firing any sooner than six positional units or not more than three times per character. Thus, the present invention enables a matrix printer to operate at an increase in speed over existing matrix printers while maintaining the clarity of the printed characters.

Brief Description of Drawings

Figure 1 is a block diagram of an electronic data processing system for use with an attached serial matrix printer incorporating the improvements of the present invention.

Figure 2 illustrates the serial matrix printer of figure 1 together with blocks representing certain printer logic functions controlling its operation.

Figure 3 illustrates the printhead in the serial matrix printer of the present invention.

Figures 4—70 illustrate the matrix character patterns for a preferred font of characters for the serial matrix printer of the present invention.

Figure 71 illustrates the print hammer firing times for the first row of the character "3" for the matrix character pattern of the present invention in contrast with the first row of the matrix character pattern for an existing dot matrix printer.

Detailed Description of Preferred Embodiments

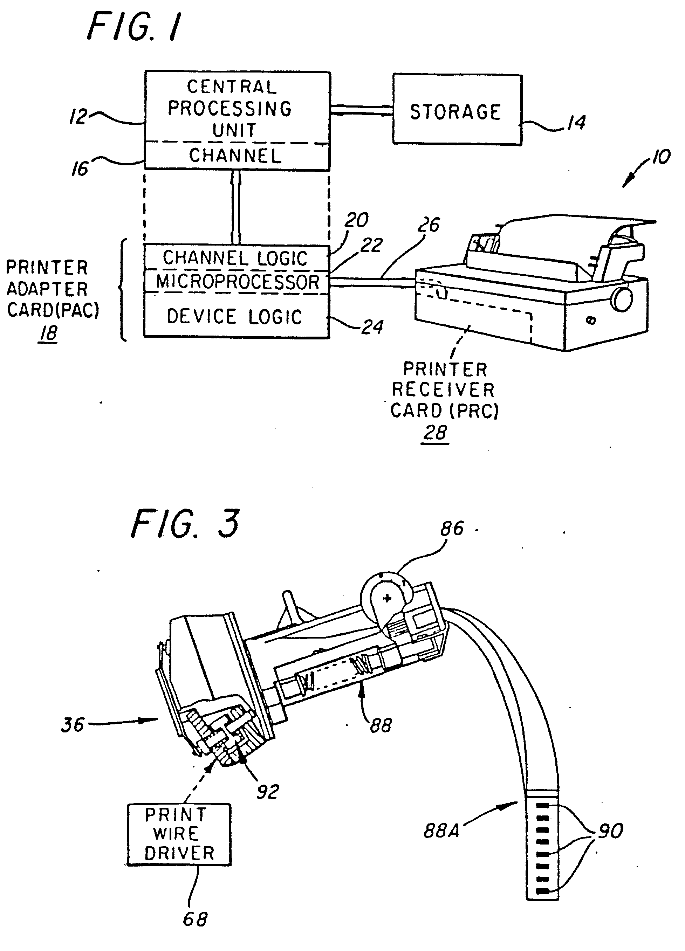

Figures 1 illustrates a typical electronic data processing system which may be used in conjunction with a high speed serial wire matrix printer 10 of the present invention. While the present invention is described in use with a serial wire matrix printer, it will be understood by those skilled in the art that the principles of the invention may be applied to other types of impact matrix printers.

The data processing system illustrated in figure 1 is analogous to the system configurations that are possible with the IBM (Registered, Trademark, International Business Machines Corporation) Series/1 System. A central processing unit (CPU) 12 has associated storage facilities 14 and channel facilities 16. A printer adapter card 18, comprising channel logic 20, microprocessor 22 and device logic 24, is connected to the central processing unit 12. The printer adapter card 18 is interconnected through a cable 26 to a printer receiver card 28 and through it to the serial wire matrix printer 10.

The central processing unit 12 issues input/output (I/O) commands to the wire matrix printer 10 through the printer adapter card 18 and receives status information and action completed information in return. The cable 26 incorporates a number of wires which are less than the total number of significant data bits required to transfer character image information and functional information to the wire matrix printer 10. The printer adapter card 18 transfers characters from the storage facility 14 and converts them into the corresponding matrix pattern to be printed. The program in the printer adapter card 18 can define the length of the forms and the overflow line on the forms.

The channel logic 20 allows signals to pass back and forth between the central processing unit 12 and the printer adapter card 18 to control the direction and type of data flow. The microprocessor 22 of the printer adapter card 18 controls the operation of the wire matrix printer 10, performs tests on conditions and status, and presents interrupt requests.

A print data buffer holds on line of data to be printed (maximum of 132 characters). The characters are stores in eight bit EBCDIC (Extended Binary Coded Decimal Interchange Code) and are transferred from the main storage 14 two bytes at a time. A wire image buffer generates printed characters by determining which print wires should be fired to form the character impressions.

The printer adapter card 18 functions as the connector between the central processing unit I/O channel 16 and the wire matrix printer 10, performing the following functions:

1. Interprets and executes commands from the channel.

2. Provides a path for data between the channel and the printer.

3. Transfers data in parallel one or two bytes at a time.

4. Furnishes status information to the channel and reports conditions codes after I/O instructions and during interrupts.

5. Checks the accuracy of transferred data.

6. Converts characters from storage into character matrix impressions.

7. Selects direction of printing by determining which end of the line to be printed is closest to the present printhead position.

The central processing unit 12 and its associated input and output devices are generally characterized as a minicomputer. The IBM 4953 processors, models A or B, or the IBM 4955 processors, models A or B, can operate as the central processing unit 12 and its associated channel 16. The IBM 4974 printer and its attachment feature are analogous to the serial wire matrix printer 10 and the printer adapter card 18. Other impact matrix printers may be substituted for the serial wire matrix printer 10 in practicing the present invention.

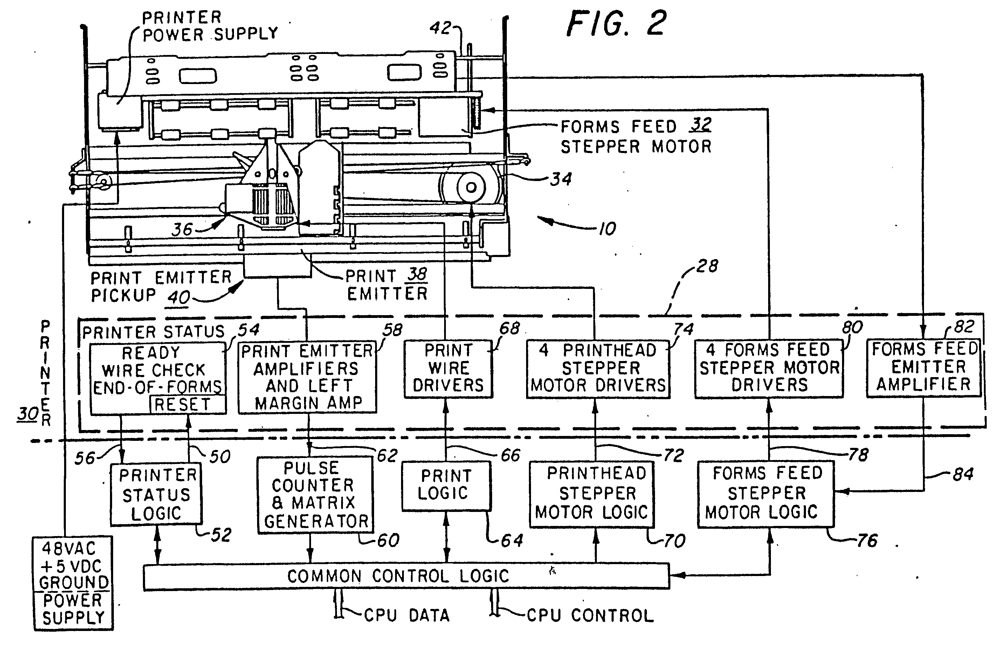

Figure 2 illustrates in a schematic way the serial wire matrix printer 10 together with blocks representative of certain printer logic operations to illustrate the basic data flow. The wire matrix printer 10 and printer receiver card 28 incorporate the items located above line 30, while the items located below the line 30 include printer logic operations of the printer adapter card 18 and central processing unit 12. The printer 10 includes two stepper motors, a forms feed stepper motor 32 for driving the forms feed mechanism and a printhead stepper motor 34 for driving a printhead 36. The motors 32 and 34 are under the control of the printer adapter card 18. A print emitter 38 and print emitter pickup 40 determine where the printhead 36 is positioned along the print line and in which direction it is moving. A forms feed emitter 42 determines how far the forms have advanced in the printer 10.

A reset signal 50 from the printer status logic 52 is applied to the Ready, Wire Check, End-Of-Forms block 54 to reset the wire check latch in the printer 10. The printer 10 in turn supplies the printer status logic 52 with the printer status on line 56 to indicate the status of the printer such as: a Ready signal indicating the printer 10 is operational; a Wire Check signal indicating a print magnet driver has been turned on too long; and an End-Of-Forms signal indicating the present of absence of forms.

Print emitter amplifiers and left margin amplifier 58 amplify the signal from the print emitter 38 to signal the pulse counter and matrix generator 60 on line 62, indicating the position and direction of the printhead 36. Print wire signals from print logic 64 are applied on the line 66 to the print wire drivers 68 to fire the print magnets in the printhead 36. Printer stepper motor signals from printhead stepper motor logic 70 are applied on the line 72 to the four printhead stepper motor drivers 74 to the printhead stepper motor 34. The signals applied from the printhead stepper motor logic 70 cause the printhead 36 to be moved left or right along the print line. Signals from forms feed stepper motor logic 76 are applied on the line 78 to the four form feeds stepper motor drivers 80 to cause the forms feed stepper motor 32 to advance the form to the next line or to eject the form. The forms feed emitter 42 applies a signal to a forms feed emitter amplifier 82 to signal the forms feed stepper motor logic 76 on line 84 as to how far the forms have advanced.

The serial wire matrix printer 10 typically operates at 120 characters per second (cps), prints up to 132 characters per line, prints 10 characters per 2,54 cm (one inch) with a maximum line length of 33,5 cm (13,2 inches). The printer 10 may also print six lines per 2,54 cm (one inch) and spaces or skips six lines per 2,54 cm (one inch) with a maximum of 84 lines per command. The printer 10 has no keyboard, keys or lights or other controls similar to those of a typewriter. A power switch turns the printer 10 ON and OFF.

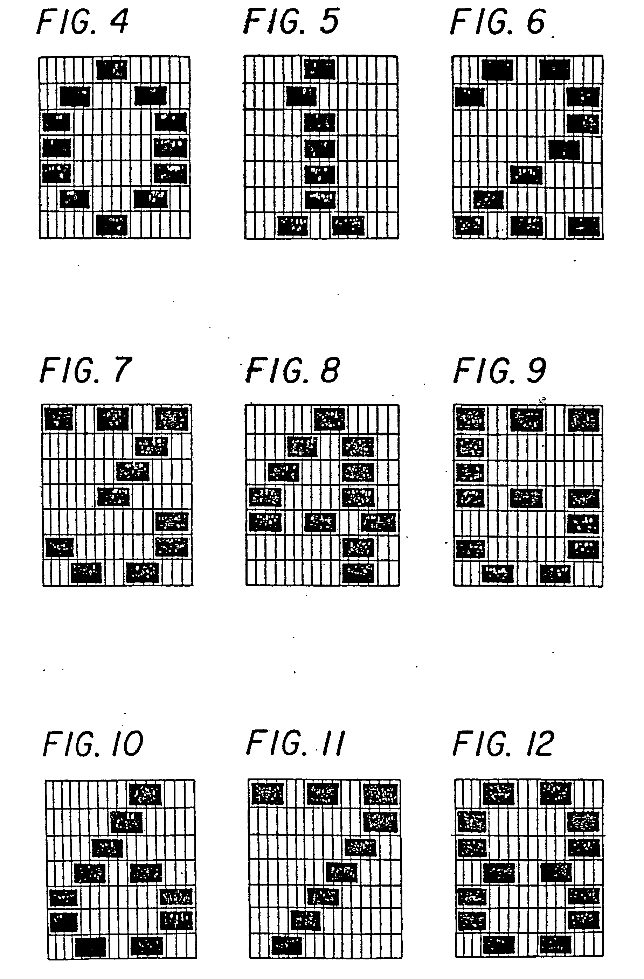

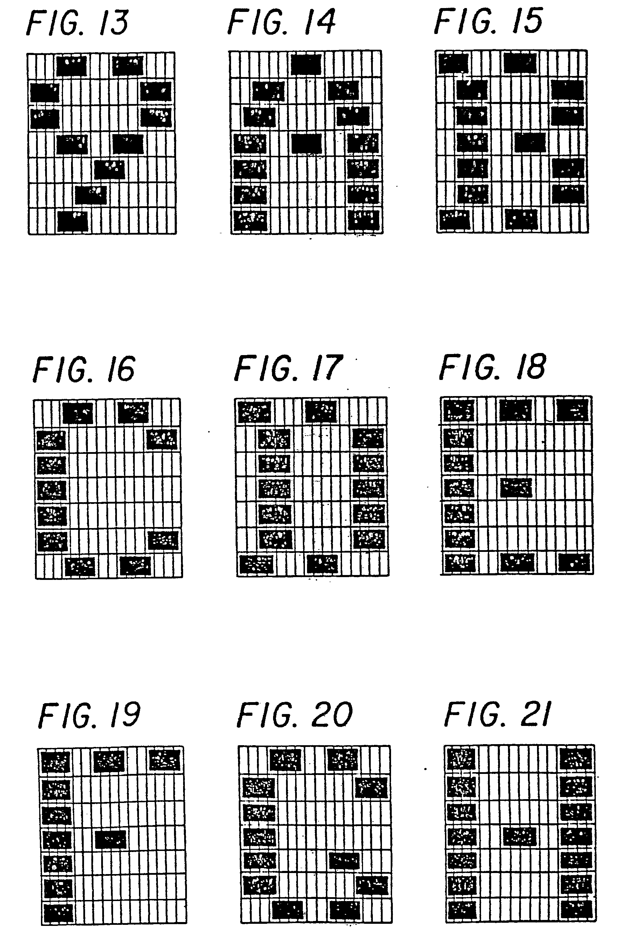

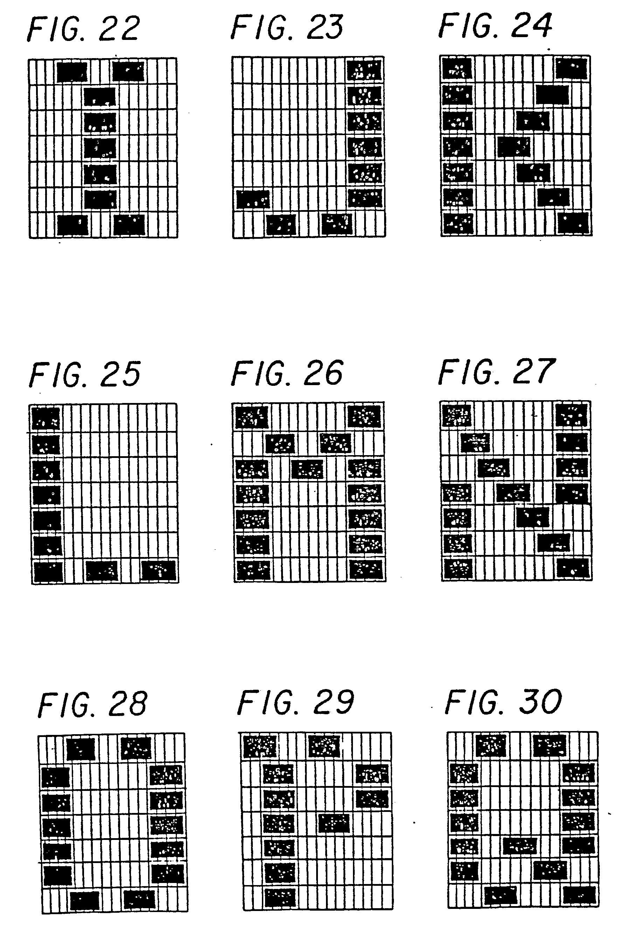

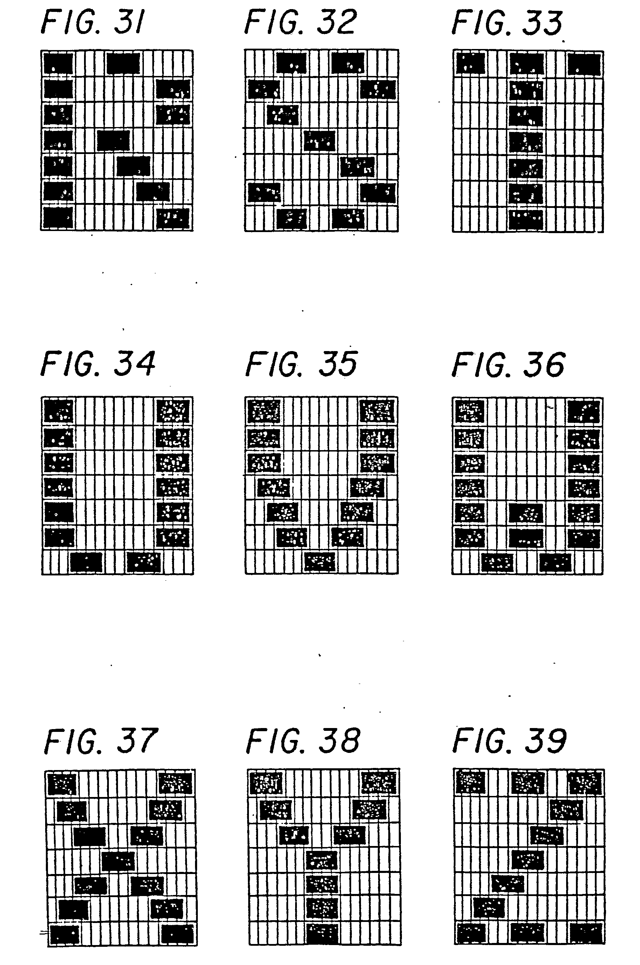

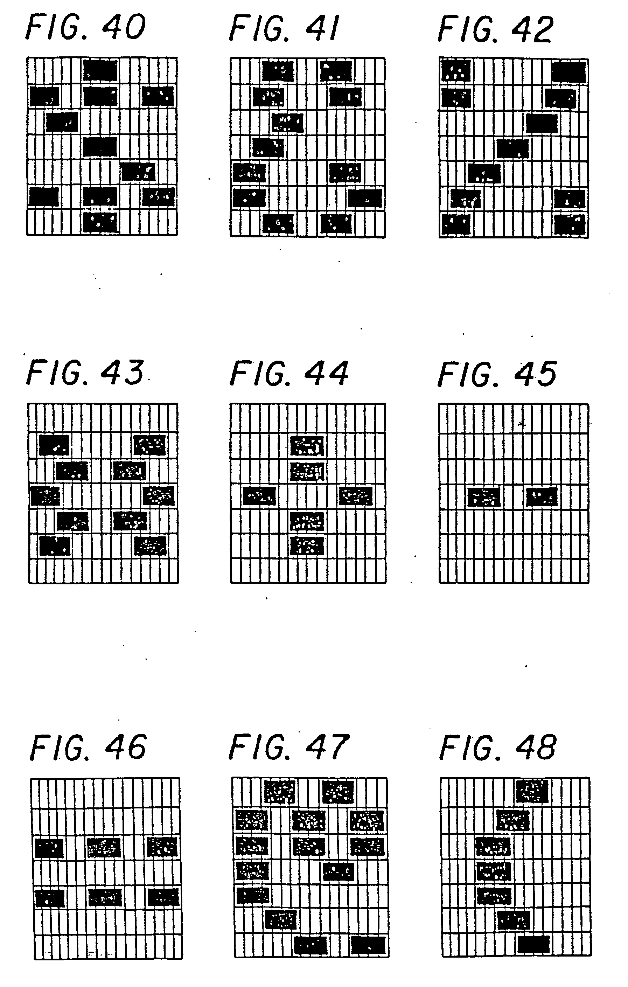

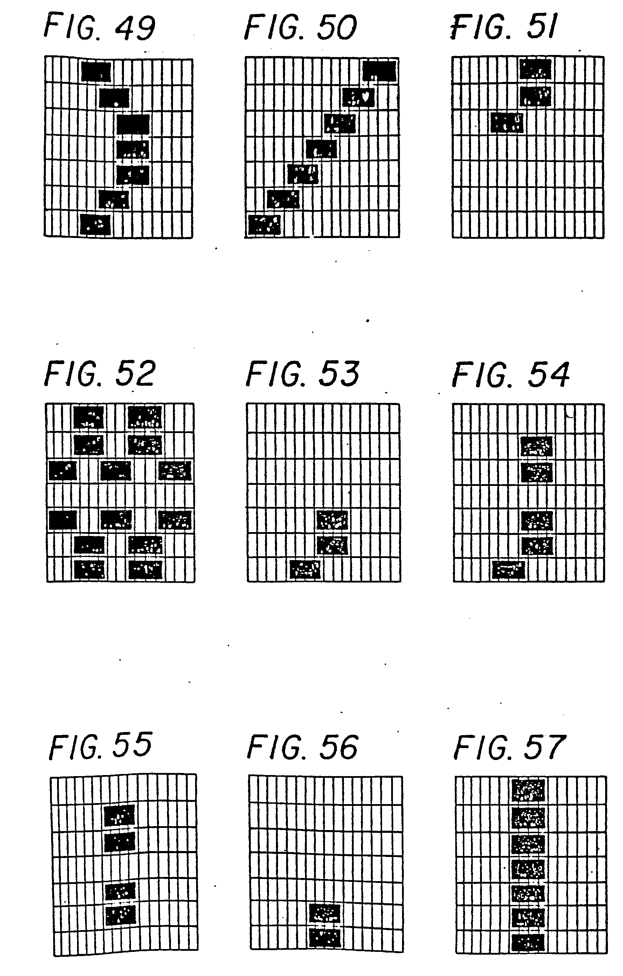

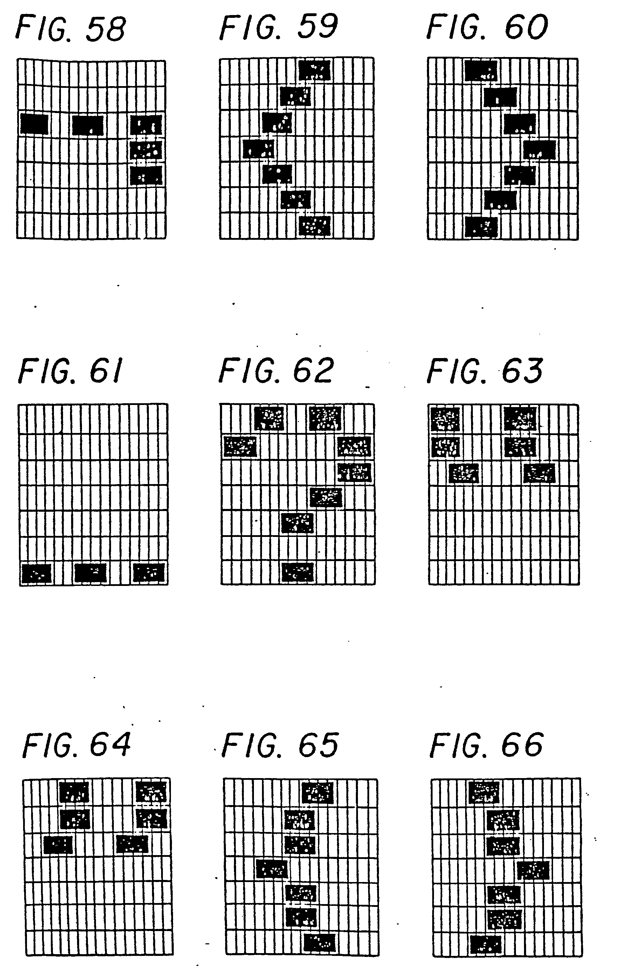

Figure 3 illustrates the printhead 36 of the printer 10. The printhead 36 is moved along the print line by the printhead stepper motor 34 under the control of the printer adapter card 18. A copy control dial 86 adjusts the printhead 36 for the various thicknesses of the forms. A wire guide 88 includes a columnar housing 88A for guiding each of the eight print wires 90. The first seven print wires 90 are aligned with the rows of the matrix character pattern for forming the font of characters illustrated in figures 4—70. The eighth print wire 90 may be used by the printer 10 for underscoring.

Each of the print wires 90 is actuated by a print wire driver 68 actuating a print coil 92. The print wire drivers 68 are turned on by the control of the printer adapter card 18 for causing selected ones of the print wires 90 to be actuated and driven against an inked ribbon to form a portion of the matrix pattern for a character.

The impact heads of the print wires in prior art matrix printers have generally been circular in shape. The impact of the head of the print wires upon the inked ribbon and in turn the document causes a dot matrix character pattern to be formed. Current wire matrix printers utilizing a circular impact print wire element form the characters on a 7x7 restricted matrix pattern. In horizontally stepping the printhead along the print line, the restricted matrix pattern of the character font was such that any dot defined as "on" had to be horizontally adjacent to a "off" dot. In this way no two horizontally adjacent dots could exist within the character matrix. Such a character matrix pattern for the font of characters permitted a maximum of only four dots to exist horizontally within a row, while a single dot could exist in any one of the seven discrete impact areas of the character matrix pattern. The "off" time defined by the restrictive matrix pattern allowed the print hammer to recover and the printhead to be moved at twice the speed it would if each of the seven dots had to be printed.

The print wires 90 of the present invention have a rectangularly shaped impact head, whereby the inked impression created by one of the print wires 90 striking the inked ribbon is an elongated print bar. The impact head of print wires 90 has its longitudinal dimension extending in the horizontal direction of movement of the printhead 36 along the print line.

The figures 4—70 illustrate a matrix character pattern for a font of characters which may be formed by the utilization of the print wires 90 of the present invention in a serial wire matrix printer 10. The total character matrix of each of the characters in figures 4—70 is twenty units wide with thirteen adjacent units within the matrix for use in firing the print wire drivers 68. The basic character image information for firing the print wire drivers 68 representing each of the characters illustrated in figures 4—70 is placed in storage. The matrix pattern for forming any of the characters of figures 4—70 is such that the print hammer controlled by the print wire drivers 68 is restricted from firing any sooner than six positional units, or more than three times per character. This is contrasted to the restricted matrix pattern of present dot matrix printers in which four dots may exist horizontally within a row to form a character.

The oblong of rectangular impact head of the print wire 90 produces a print bar instead of a print dot. The print bar may be approximately 0,38 mm (0,015 inches) high and 0,5 mm (0,020 inches) wide. The actual width of the print bar must be narrower than 0,76 mm (0,030 inches) so that a distinct "off" spot is visible between the three vertical segments of the character "W" in rows five and six. The width of the print bar and the accompanying figures is 0,5 mm (0,020 inches) so the printed bar occupies or overlaps four positional units and the printed character occupies a total of sixteen of the twenty available positional units, creating a 20% separation gap between characters.

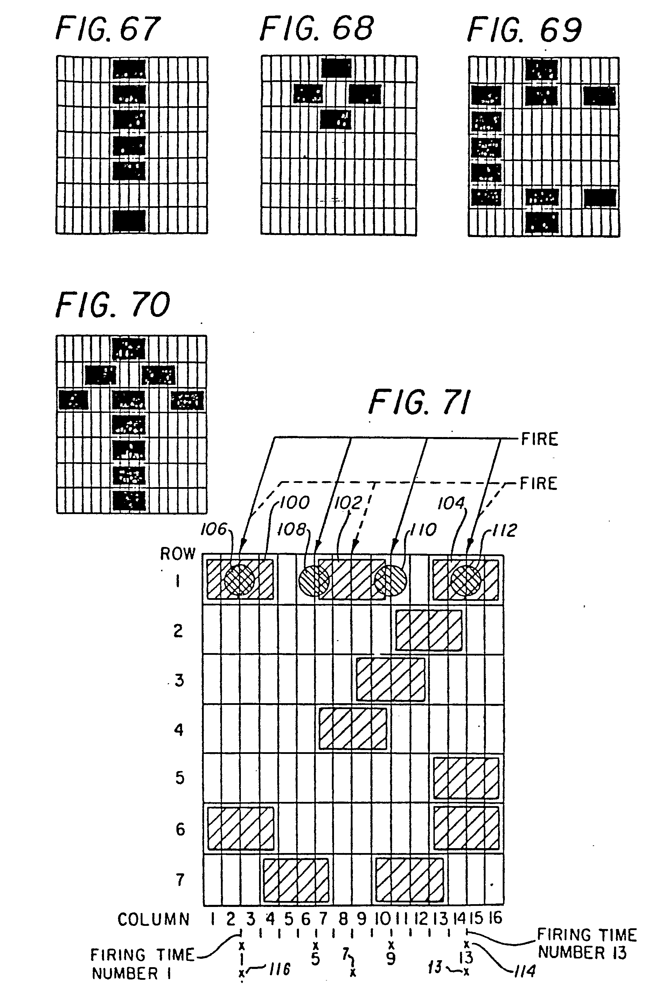

Figure 71 compares the character matrix printing pattern of a prior art dot matrix printer with the character matrix pattern utilized in the present invention. For purposes of comparison the first row of the number "3" has the print bar impressions 100, 102 and 104 of the present invention overlaying the dots 106, 108, 110 and 112 representing the character matrix pattern of a prior art dot matrix printer. The matrix pattern illustrated has seven rows and sixteen vertical positional units for positioning the printed character. The firing time for the signals applied from the print wire drivers 68 to the print coils 92 may occur in any one of the thirteen positional units indicated in figure 71. In the dot matrix printer, the print firing signals 114 fire the print coils four times, at the times represented by positional indicators 1, 5, 9 and 13. Each of the circular dots 106, 108, 110 and 112 extends horizontally through two positional units, and there are four positional units between the firing time for each of the dots.

By way of contrast, the three print bars 100, 102 and 104 along the first horizontal row are formed by the three print firing signals 116 from the print wire drivers 68 to the print coils 92 at the times represented by positional indicators 1, 7 and 13. Each of the oblong print bars of the character matrix in the present invention extends horizontally through four positional units and the print wire 90 is restricted from firing any sooner than six positional units, which is not more than three times along a horizontal row for any character appearing in the font of characters of figures 4—70. The six positional spaces occuring between print wire firings in the character matrix pattern of the present invention are equivalent to a 50% gain over the area covered by the four positional spaces between print wire firings of the prior art dot matrix character matrix pattern.

The present invention may be used in conjunction with impact matrix printers other than the serial wire matrix printer described above, such as the bar matrix and helix matrix printers.

## Claims

1. A high speed impact matrix printer of the type comprising:

means for relatively moving a print mechanism (36) along successive print lines of a document to be printed, said print lines comprising characters arranged in accordance with a matrix character format having a predetermined number of possible firing times therein, and said print mechanism (36) comprising at least one print element;

storage means for storing character configuration information in accordance with said matrix character format for individual characters to be printed in said successive print lines;

means (68) for providing print firing signals to said print mechanism, said print firing signals being derived from the character configuration information stored in said storage means, and said print firing means (68) being operable in timed relation with relative movement of said print mechanism (36) along said successive print lines to supply firing signals as required; this printer being characterized in that it further includes:

said at least one print element in said print mechanism (36) comprising an impact member (90) having an elongated impact surface, said impact surface having its longitudinal dimension extending in the same direction as the direction of relative movement of said print mechanism along said successive print lines, whereby the impact surface of said impact member (90) extends over a plurality of print firing locations (fig. 71) and thus fewer firing signals are required to be applied to said print mechanism in order to effect formation of said individual characters during printing operations.

2. A matrix printer according to claim 1, comprising at least one additional print element, wherein said print elements are arranged in said print mechanism (36) such that the impact surfaces of said elongated impact members (90) have their longitudinal dimensions extending in the same direction as the direction of relative movements of the print mechanism.

3. A matrix printer according to claim 2, characterized in that the number of said print elements is at least equal to the number of rows in said matrix character format.

4. A matrix printer according to any one of the preceding claims, characterized in that said matrix character format comprises a matrix arranged in seven rows and sixteen columns, said matrix format having thirteen possible firing locations therein (fig. 71).

5. A matrix printer according to any one of the preceding claims characterized in that each of said elongated impact members has an impact surface dimensioned to extend four columnar positional units in width and one row in height, said matrix character format having six positional units between said print firing signals in a row of said character matrix format (fig. 71).

6. A matrix printer according to any one of the preceidng claims characterized in that the said matrix printer is a serial wire matrix printer, and the said impact members are impact wire elements.

7. A matrix printer according to any one of the preceding claims characterized in that the impact surface of the said impact members is a rectangularly shaped impact head.

## Revendications

1. Imprimante matricielle à percussion à grande vitesse, du genre comportant:

des moyens pour déplacer, de façon relative, un mécanisme d'impression (36) le long des lignes successives d'un document à imprimer; ces lignes d'impression comportant des caractères disposés suivant une matrice de caractères ayant un format qui contient un nombre prédéterminé de temps de frappe possibles, et ledit mécanisme d'impression (36) comportant au moins un élément d'impression;

des moyens de stockage pour stocker des informations relatives à la configuration des caractères, conformément audit format de la matrice de caractères, en vue de l'impression des différents caractères en cause sur les lignes d'impression successives du document;

des moyens (68) pour fournir les signaux d'ordres de frappe audit mécanisme, d'impression, ces signaux d'ordres de frappe étant déduits des informations relatives à la configuration des caractères contenues dans les moyens de stockage précités; et ces moyens (68) pour commander la frappe pouvant être actionnés en synchronisme avec le mouvement du mécanisme d'impression (36) le long des lignes d'impression successives, en vue de produire les signaux de frappe nécessaires; l'imprimante étant caractérisée en ce qu'elle comporte en outre les particularités suivantes:

chaque élément d'impression du mécanisme d'impression (36) comporte un organe d'impact (90) qui présente une surface d'impact allongée qui est orientée longitudinalement dans le sens du déplacement relatif du mécanisme d'impression, le long des lignes d'impression successives; la surface d'impact de cet organe d'impact (90) s'étendant ainsi sur plusieurs emplacements de frappe (figure 71), de sorte qu'il suffit d'un nombre relativement plus faible de signaux de frappe, à envoyer au mécanisme d'impression, pour obtenir les divers caractères imprimés lorsque l'imprimante fonctionne.

2. Imprimante selon la revendication 1, comportant au moins un élément d'impression supplémentaire, caractérisée en ce que la disposition desdits éléments d'impression dans le mécanisme d'impression (36) est telle que les surfaces d'impact des organes d'impact allongés (90) desdits éléments d'impression sont orientées longitudinalement dans la même direction que celle du déplacement relatif du mécanisme d'impression.

3. Imprimante selon la revendication 2, caractérisée en ce que le nombre des éléments d'impression est au moins égal au nombre de rangées du format de la matrice de caractères.

4. Imprimante selon l'une quelconque des revendications 1 à 3, caractérisée en ce que le format de la matrice de caractères correspond à une matrice ayant sept rangées et seize colonnes, le format matriciel contenant treize emplacements possibles de frappe (figure 71).

5. Imprimante selon l'une quelconque des revendications précédentes caractérisée en ce que chacun des organes d'impact allongés présente une surface d'impact dont les dimensions lui permettent de couvrir en largeur quatre emplacements unitaires de colonnes, et de couvrir en hauteur une rangée, ledit format matriciel contenant six éléments unitaires d'emplacements entre les signaux de frappe dans une rangée de ce format matriciel (figure 71).

6. Imprimante selon l'une quelconque des revendications précédentes caractérisée en ce qu'elle est constituée par une imprimante matricielle à fils en série et en ce que les organes d'impact sont constitués par des fils élémentaires d'impact.

7. Imprimante selon l'une quelconque des revendications précédentes caractérisée en ce que la surface d'impact des organes est une tête d'impact de forme rectangulaire.

**Patentansprüche**

1. Matrixschnelldrucker, bestehend aus Mitteln zur Verschiebung eines Druckwerkes (36) in aufeinanderfolgenden Zeilen eines zu bedruckenden Dokumentes, wobei die Zeichen in den Druckzeilen gemäß einer Zeichenmatrix strukturiert sind, welche eine vorgegebene Anzahl möglicher Anschlagzeiten umfaßt, und wobei das Druckwerk mindestens ein Druckorgan enthält, und aus Speichermitteln zur Speicherung von Daten, welch die Konfiguration der Zeichen bezüglich des Zeichenmatrixformates betreffen im Hinblick auf den Druck der einzelnen Zeichen in aufeinanderfolgenden Druckzeilen des Dokumentes, und aus Mitteln (68) zur Erzeugung von Anschlagbefehlssignalen für das Druckwerk, wobei diese Anschlagbefehlssignale von den in den Speichermitteln enthaltenen und die Zeichenkonfiguration betreffenden Daten abgeleitet werden und wobei diese Mittel (68) zur Drucksteuerung synchron mit der Bewegung des Druckwerkes (36) in aufeinanderfolgenden Druckzeilen gesteuert werden, um die erforderlichen Drucksignale vorzusehen, und aus dem Drucker, dadurch gekennzeichnet, daß jedes Druckorgan des Druckwerkes (36) ein Anschlagelement (90) mit einer erweiterten Anschlagfläche aufweist, welche ihrer Länge nach in Verschieberichtung des Druckwerkes in aufeinanderfolgenden Druckzeilen ausgerichtet ist und welche sich über mehrere Anschlagstellen erstreckt (Abb. 71), so daß eine verhältnismäßig geringe Anzahl Anschlagsignale für das Druckwerk ausreicht, um den Druck der einzelnen Zeichen zu bewirken, wenn die Maschine in Betrieb ist.

2. Matrixdrucker nach Anspruch 1 mit mindestens einem zusätzlichen Druckorgan, dadurch gekennzeichnet, daß die Anordnung der Druckorgane im Druckwerk (36) dergestalt ist, daß die Anschlagflächen der erweiterten Anschlagelemente (90) der Druckorgane der Länge nach in der gleichen Richtung wie die Verschieberichtung des Druckwerkes ausgerichtet sind.

3. Drucker nach Anspruch 2, dadurch gekennzeichnet, daß die Anzahl der Druckorgane mindestens gleich der Anzahl der Zeilen im Matrixzeichenformat ist.

4. Drucker nach einem der Ansprüche 1 bis 3, dadurch gekennzeichnet, daß das Matrixzeichenformat eine Matrix aus sieben Reihen und sechzehn Spalten enthält, wobei das Matrixformat dreizehn mögliche Anschlagstellen hat (Abb. 71).

5. Drucker nach einem der Ansprüche 1 bis 4, dadurch gekennzeichnet, daß jedes einzelne erweiterte Anschlagelement eine Anschlagfläche aufweist, deren Abmessungen es ihr ermöglichen, sich in der Breite über vier Spaltenstellen und in der Höhe über eine Reihe zu erstrecken, wobei das Matrixzeichenformat sechs Stelleneinheiten zwischen den Anschlagsignalen in einer Reihe dieses Matrixzeichenformates enthält.

6. Drucker nach einem der Ansprüche 1 bis 5, dadurch gekennzeichnet, daß er ein Seriennadelmatrixdrucker ist und daß die Anschlagsorgane Anschlagsnadelelemente sind.

7. Drucker nach einem der Ansprüche 1 bis 6, dadurch gekennzeichnet, daß die Anschlagfläche der Anschlagelemente ein rechteckiger Anschlagkopf ist.

## FIG. 1

PRINTER ADAPTER CARD(PAC) 18

CENTRAL PROCESSING UNIT

CHANNEL

STORAGE

CHANNEL LOGIC

MICROPROCESSOR

DEVICE LOGIC

PRINTER RECEIVER CARD (PRC) 28

## FIG. 3

PRINT WIRE DRIVER

FIG. 2

PRINTER POWER SUPPLY

42

FORMS FEED 32 STEPPER MOTOR

34

36

10

28

PRINT EMITTER PICKUP 40

PRINT 38 EMITTER

PRINTER 30

PRINTER STATUS 54

| READY WIRE CHECK END-OF-FORMS RESET | PRINT EMITTER AMPLIFIERS AND LEFT MARGIN AMP | PRINT WIRE DRIVERS | 4 PRINTHEAD STEPPER MOTOR DRIVERS | 4 FORMS FEED STEPPER MOTOR DRIVERS | FORMS FEED EMITTER AMPLIFIER |

58    68    74    80    82

56    50    62    66    72    78    84

| PRINTER STATUS LOGIC | PULSE COUNTER & MATRIX GENERATOR | PRINT LOGIC | PRINTHEAD STEPPER MOTOR LOGIC | FORMS FEED STEPPER MOTOR LOGIC |

52    60    64    70    76

48VAC +5 VDC GROUND POWER SUPPLY

COMMON CONTROL LOGIC

CPU DATA    CPU CONTROL

0 042 948

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

FIG. 36

FIG. 37

FIG. 38

FIG. 39

FIG. 40

FIG. 41

FIG. 42

FIG. 43

FIG. 44

FIG. 45

FIG. 46

FIG. 47

FIG. 48

FIG. 49

FIG. 50

FIG. 51

FIG. 52

FIG. 53

FIG. 54

FIG. 55

FIG. 56

FIG. 57

FIG. 58     FIG. 59     FIG. 60

FIG. 61     FIG. 62     FIG. 63

FIG. 64     FIG. 65     FIG. 66

0 042 948

*FIG. 67*  *FIG. 68*  *FIG. 69*

*FIG. 70*

*FIG. 71*

10